# FASCICULE DE BREVET EUROPEEN

(11) **EP 1 422 437 B1**
(45) Date de publication et mention de la délivrance du brevet: **23.05.2007**
(21) Numéro de dépôt: 03292881.4
(22) Date de dépôt: 19.11.2003
(51) Int. Cl.: F16F 7/108, F16F 15/14

(54) **Dispositif d'absorption et d'atténuation de vibrations pour arbre d'entraînement dans un véhicule**
Schwingungsdämpfende Vorrichtung für Antriebswelle eines Kraftfahrzeuges
Vibration absorbing and attenuating device for a vehicle drive shaft

(30) Priorité: 19.11.2002 FR 0214493
(43) Date de publication de la demande: 26.05.2004
(73) Titulaire: Société du Caoutchouc Technique & Industriel, 95450 Seraincourt Vigny (FR)
(72) Inventeur: Saguet, Robert, 92200 Neuilly sur Seine (FR)
(74) Mandataire: Fosse, Danièle

(56) Documents cités:
- US-A- 5 660 256
- PATENT ABSTRACTS OF JAPAN vol. 014, no. 527 (M-1050), 20 novembre 1990 (1990-11-20) & JP 02 221731 A (TOKAI RUBBER IND LTD), 4 septembre 1990 (1990-09-04)
- PATENT ABSTRACTS OF JAPAN vol. 015, no. 174 (M-1109), 2 mai 1991 (1991-05-02) & JP 03 037450 A (KINUGAWA RUBBER IND CO LTD), 18 février 1991 (1991-02-18)

## Description

La présente invention a pour but de proposer un dispositif d'amortissement dynamique ou dispositif d'absorption et atténuation de vibrations pour arbre d'entraînement rotatif véhicule afin de réduire ou éliminer les vibrations survenant dans l'arbre d'entraînement.

Lorsqu'un arbre rotatif est entraîné en rotation, des phénomènes de balourd surviennent. En résultat de ces phénomènes de balourd, se produisent des vibrations telles que des vibrations de déformations angulaires et des vibrations de torsion. Il est souhaitable que ces vibrations nuisibles n'interviennent pas. Des dispositifs d'amortissement différents et des amortisseurs de masse ont été largement utilisés pour supprimer ces vibrations nuisibles.

Des amortisseurs dynamiques sont souvent installés ou insérés directement sur les arbres rotatifs. L'amortisseur dynamique est destiné à générer une fréquence de vibration prédéterminée ajustée à la fréquence dominante des vibrations nuisibles excitées. Le dispositif d'amortissement dynamique convertit ou transfère l'énergie vibratoire de l'arbre d'entraînement rotatif vers le dispositif d'amortissement dynamique par résonance et absorbe éventuellement énergie vibratoire de l'arbre rotatif.

Pour résumer, le dispositif d'amortissement tente d'éliminer ou d'annuler les vibrations qui sont induites ou causées par l'arbre d'entraînement rotatif en fonctionnement normal du train d'entraînement du véhicule. Le dispositif d'amortissement dynamique doit générer de manière appropriée la plage de fréquence harmonique spécifique qui est nécessaire pour contrebalancer les vibrations indésirables de l'arbre d'entraînement rotatif.

Dans US-A-5 076 763 de Hamada et al, on décrit un dispositif d'amortissement dynamique qui comprend une paire d'organes de fixation conformés en bague, écartés l'un de l'autre à intervalle prédéterminé. Ce dispositif est inséré et porté par l'arbre d'entraînement rotatif. Une masse est disposée entre la paire d'organes de fixation conformés en bague. Une paire d'organe de liaison est ensuite prévue pour relier les extrémités des organes de fixation à l'extrémité de la masse. Il est noté que le dispositif d'amortissement de Hamada et al nécessite des colliers de serrage métalliques individuels devant être ajoutés sur chaque côté et sur les organes de fixation conformés en bague pour fixer de manière efficace le dispositif d'amortissement dynamique sur l'arbre menant rotatif. En outre, il doit être noté que les organes de fixation en forme de bague sont écartés l'un de l'autre depuis la masse non seulement dans la direction verticale mais également en direction horizontale augmentant la taille globale de l'ensemble.

Le document Patent Abstracts of Japan, vol. 014, n° 527 (M-1050) (JP 02221731 A) décrit un dispositif d'atténuation des vibrations pour arbre rotatif, comprenant une masse cylindrique, un manchon élastique reliant la bague à l'arbre au moyen de deux bagues élastiques, la première bague ayant une forme cylindrique et s'étendant en direction longitudinale à partir d'une première extrémité de la masse pour fixer le dispositif à l'arbre, avec éventuellement un collier de fixation, la seconde bague étant logée sous la masse au voisinage de sa seconde extrémité et soumise à une déformation compressive. Dans ce document, la constante d'élasticité de la première bague est plus faible que celle de la seconde bague.

C'est un but de l'invention de proposer un dispositif permettant d'atténuer et d'absorber les vibrations sur un arbre d'entraînement d'un moteur de véhicule d'une construction simple et qui est capable d'éliminer les inconvénients précédents.

L'invention est définie par les caractéristiques de la revendication 1.

L'invention concerne un dispositif d'absorption et d'atténuation de vibrations pour arbre d'entraînement rotatif d'un véhicule à moteur comportant : une masse de forme générale cylindrique ayant une surface intérieure et une surface extérieure, un organe élastique fait d'un matériau élastomérique tel que du caoutchouc ou analogue, cet organe élastique reliant la masse à l'arbre au moyen de deux bagues élastiques, la première bague élastique ayant une forme cylindrique et s'étendant en direction longitudinale à partir de l'une des extrémités de la masse, pour fixer le dispositif à l'arbre, et comportant éventuellement une ceinture de serrage pour assurer la fixation, la seconde bague élastique étant logée sous la masse au voisinage de la seconde extrémité de la masse, s'étendant radialement par rapport à l'arbre et étant soumise à une déformation compressive entre la masse et l'arbre.

De manière avantageuse, un dispositif d'amortissement dynamique permet des changements dans la plage de fréquences harmoniques en augmentant ou en réduisant la longueur ou en modifiant la forme de la bague élastique logée entre la masse et l'arbre d'entraînement

Ainsi, la seconde bague élastique est soumise à une déformation compressive sur au moins une partie de sa longueur seulement.

En particulier, la seconde bague élastique s'étend au-delà de l'extrémité de la masse, une partie seulement de la bague étant soumise à une déformation compressive, c'est-à-dire celle se trouvant entre la masse et l'arbre d'entraînement rotatif.

Selon l'invention, la seconde bague est également divisée en portions équidistantes.

Avantageusement, la présente invention propose également un amortisseur dynamique qui peut être fixé sur un arbre rotatif en utilisant soit une courroie tendue sur la première bague élastique soit pas de courroie en ajustant la forme et le diamètre de la première bague élastique afin d'augmenter la résistance au déplacement axial et rotatif une fois le dispositif monté sur l'arbre.

De manière avantageuse, il est possible de fixer l'amortisseur selon l'invention sans avoir besoin de fabriquer une tige avec des diamètres différents dans la zone où l'amortisseur est monté.

De plus, la longueur totale du dispositif est ainsi avantageusement diminuée en éliminant un organe de connexion en forme de bague entre la masse et l'arbre.

L'invention sera expliquée plus en détail par la suite en référence au dessin dans lequel :
la figure 1 représente une vue en coupe longitudinale d'un amortisseur monté sur un arbre rotatif ;
la figure 2a représente une vue en coupe longitudinale d'une première variante de réalisation d'un amortisseur ;
la figure 2b représente une vue en coupe longitudinale de l'amortisseur de la figure 2a mis en place sur un arbre rotatif;
la figure 3a représente une vue en coupe longitudinale d'une deuxième variante de réalisation d'un amortisseur monté sur un arbre rotatif ;
la figure 3b représente une vue en coupe longitudinale d'une variante de réalisation d'un amortisseur selon la figure 3a ;
la figure 4a représente une vue en coupe longitudinale d'une troisième variante de réalisation d'un amortisseur;
la figure 4b représente une vue en coupe transversale de l'amortisseur de la figure 4a selon la ligne I-I;
la figure 5a représente une vue en coupe longitudinale d'un amortisseur selon l'invention;
la figure 5b représente une vue en coupe transversale de l'amortisseur de la figure 5a selon la ligne II-II.

Le dispositif d'atténuation et d'absorption ou amortisseur dynamique 1 selon l'invention, représenté dans les figures, est monté sur un arbre rotatif 2 tel qu'un arbre d'entraînement d'un moteur de véhicule.

L'amortisseur dynamique 1 comprend une masse 3 en forme de cylindre. Cette masse 3 présente un diamètre intérieur supérieur au diamètre extérieur de l'arbre rotatif 2 sur lequel doit être monté l'amortisseur dynamique 1. La masse cylindrique 3 peut être réalisée en divers métaux, alliages et autres matériaux offrant une densité suffisante pour obtenir un poids massique requis pour amortir les vibrations de l'arbre d'entraînement 2 rotatif.

L'amortisseur 1 comporte en outre un organe élastique fait d'un matériau élastomérique tel que du caoutchouc ou analogue, cet organe élastique reliant la masse 3 à l'arbre 2 au moyen de deux bagues élastiques 4, 40 et 5, 50, 500.

La première bague élastique 4, 40 présente une forme cylindrique et s'étend en direction longitudinale à partir d'une première extrémité de la masse 3, pour fixer le dispositif à l'arbre 2. Cette bague de fixation 4, 40 présente un diamètre intérieur inférieur au diamètre extérieur de l'arbre rotatif 2 de manière à permettre une mise en place sûre de l'amortisseur dynamique 1 sur l'arbre rotatif 2 et éviter tout déplacement dudit amortisseur 1 le long de l'arbre rotatif 2.

La seconde bague élastique 5, 50, 500 est logée sous la masse 3 au voisinage de la seconde extrémité de la masse 3, du côté opposé à la première bague 4, 40 et s'étend radialement par rapport à l'arbre 2. Cette bague 5, 50, 500 est soumise à une déformation compressive entre la masse 3 et l'arbre 2.

La masse 3 est de préférence insérée par moulage avec les bagues 4, 40 ; 5, 50, 500.

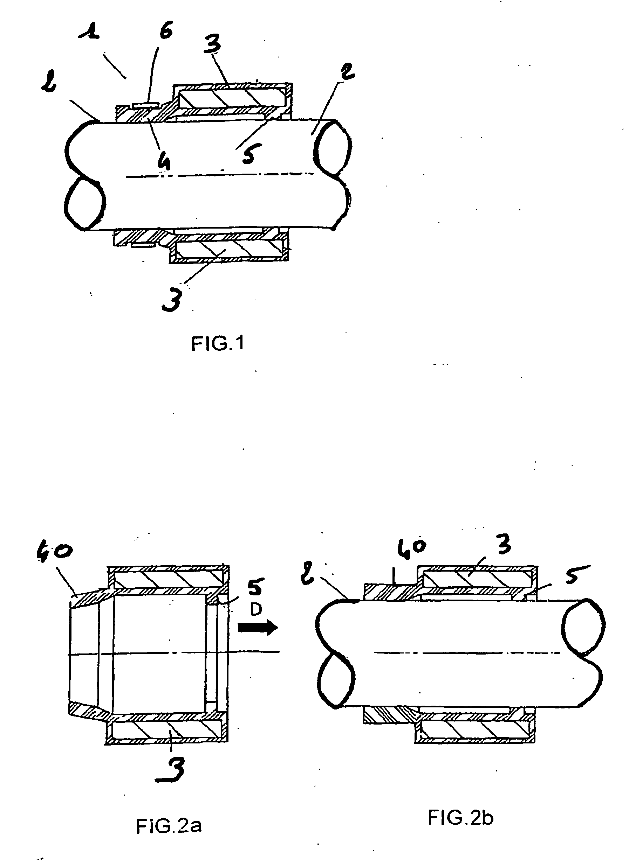

Comme on peut le voir à la figure 1, sur la bague élastique 4, un collier de serrage 6 est mis en place pour garantir une fixation encore plus sûre de l'amortisseur 1 sur l'arbre rotatif 2.

A la figure 2a la variante de l'amortisseur qui est présentée comporte une bague élastique 40 dont la forme est conique vers l'intérieur, ce qui permet d'augmenter la résistance au déplacement de l'amortisseur 1 sans qu'il soit nécessaire d'utiliser dans ce cas un collier de serrage. Ceci permet d'économiser du temps lors de la mise en place et est donc économiquement plus avantageux malgré qu'il soit nécessaire de monter le dispositif selon une direction D déterminée afin d'éviter tout risque de déformation lors du montage.

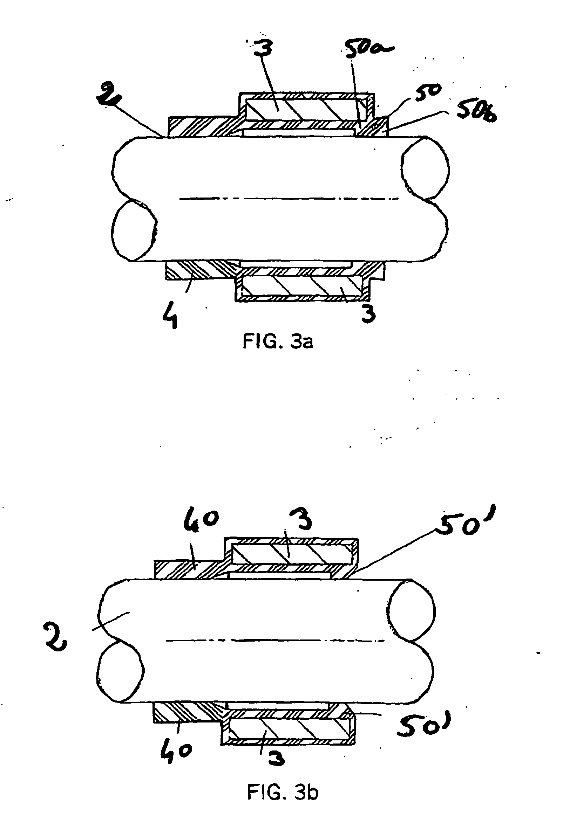

Aux figures 3a et 3b, la seconde bague élastique s'étendant au-dessous de la masse 3, entre la masse 3 et l'arbre d'entraînement 2, peut être modifiée en longueur et en forme selon différentes applications.

Ainsi, à la figure 3a, la bague élastique 50 présente une partie 50a comprimée entre l'arbre 2 et la masse 3 mais également une partie 50b qui est prolongée également axialement à l'extérieur de la masse 3. On augmente ainsi la résistance au déplacement de l'amortisseur le long de l'arbre rotatif 2 mais ceci permet également de régler l'amortisseur à la fréquence de résonance requise.

A la figure 3b, on peut voir que cette bague élastique 50' présente un pan incliné, ce qui améliore le montage du dispositif selon la direction D lorsque la première bague élastique 40 est telle que représentée à la figure 2a.

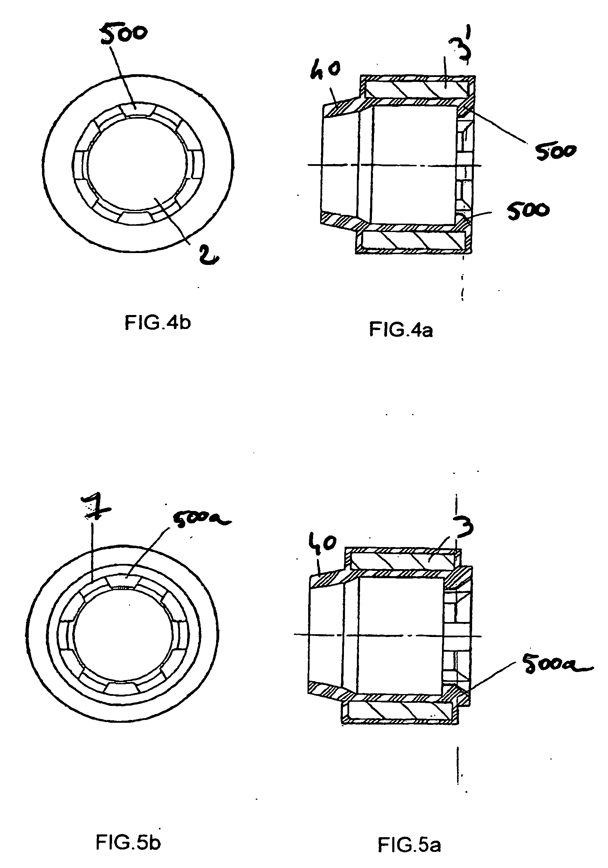

Aux figures 4a et 4b, la seconde bague élastique est divisée en portions équidistantes 500, ce qui permet de modifier la zone comprimée entre l'arbre 2 et la masse 3. Le nombre d'espaces 7 ménagés entre les portions de bague est ajustable pour régler l'amortisseur à la fréquence de résonance requise. Ceci permet de régler l'amortisseur si ceci ne peut être fait en modifiant la longueur de la seconde bague.

Les figures 5a et 5b représentent une réalisation selon l'invention selon laquelle la seconde bague élastique est divisée en six portions équidistantes 500 et une partie 500a de ladite bague s'étend également vers l'extérieur au-delà de la masse 3.

## Revendications

1. Dispositif d'absorption et d'atténuation de vibrations pour arbre d'entraînement (2) d'un véhicule à moteur comportant :
- une masse (3) de forme générale cylindrique ayant une surface intérieure et une surface extérieure
- un organe élastique fait d'un matériau élastomérique tel que du caoutchouc ou analogue, cet organe élastique reliant la masse (3) à l'arbre (2) au moyen de deux bagues élastiques (40 ; 500),
- la première bague élastique (40) ayant une forme cylindrique et s'étendant en direction longitudinale à partir d'une première extrémité de la masse (3), pour fixer le dispositif à l'arbre (2), et comportant éventuellement un collier de serrage (6) pour assurer la fixation,
- la seconde bague élastique (500) étant logée sous la masse (3) au voisinage de la seconde extrémité de la masse (3), s'étendant radialement par rapport à l'arbre (2), et présentant une partie (500) destinée à être comprimée entre l'arbre (2) et la masse (3) ainsi qu'une partie (5000) prolongée axialement à l'extérieur de la masse (3),
**caractérisé en ce que** la partie destinée à être comprimée de la seconde bague est divisisée en portions équidistantes (500).

## Claims

1. Vibration-absorbing and attenuating device for the driveshaft (2) of a motor vehicle, said device comprising:
- a mass (3) of cylindrical general shape having an inner and an outer surface;
- an elastic component made of an elastomeric material such as rubber or the like, the said elastic component connecting the mass (3) to the shaft (2) by means of two elastic rings (40: 500);
- the first elastic ring (40) having a cylindrical shape and extending in the longitudinal direction, starting from a first end of the mass (3), for the purpose of fixing the device to the shaft (2), and optionally comprising a clamping collar (6) in order to effect fixing;
- the second elastic ring (500) being housed underneath the mass (3) in the vicinity of the second end of said mass (3), extending radially in relation to the shaft (2), and having a part (500) which is intended to be compressed between said shaft (2) and said mass (3) and also a part (500a) which is prolonged axially outside said mass (3);
**characterised in that that** part of the second ring which is intended to be compressed is divided into equidistant portions (500).

## Patentansprüche

1. Schwingungsaufnehmende und schwingungsdämpfende Vorrichtung für die Antriebswelle (2) eines Kraftfahrzeuges mit
- einer im wesentlichen zylindrischen Masse (3) mit einer Innenfläche und einer Außenfläche,
- einem elastischen Element aus einem Elastomerwerkstoff wie Gummi oder einem ähnlichen Werkstoff, das die Masse (3) über zwei elastische Ringe (40; 500) mit der Antriebswelle (2) verbindet,
- wobei der erste elastische Ring (40) eine zylindrische Form aufweist und sich ausgehend von einem ersten Ende der Masse (3) deren Längsrichtung erstreckt, um die Vorrichtung an der Antriebswelle (2) zu befestigen, und gegebenenfalls eine Klemmschelle (6) zur Sicherung der Befestigung aufweist,
- wobei der zweite elastische Ring (500) unter der Masse (3) in der Nähe des zweiten Endes der Masse (3) sitzt und sich radial zu der Antriebswelle (2) erstreckt und ein Teil (500) aufweist, das zwischen der Antriebswelle (2) und der Masse (3) zusammendrückbar ist, sowie ein Teil (500a), das außen an der Masse (3) axial verlängert ist,
**dadurch gekennzeichnet, dass** das Teil des zweiten Rings, das zusammendrückbar ist, in abstandsgleiche Abschnitte (500) unterteilt ist.
